# EUROPEAN PATENT SPECIFICATION

(11) **EP 3 196 010 B1**
(45) Date of publication and mention of the grant of the patent: **03.06.2020**
(21) Application number: 16152071.3
(22) Date of filing: 20.01.2016
(51) Int. Cl.: B32B 7/04, B32B 15/04, B32B 3/02, B32B 3/08

(54) **LAMINATE AND METHOD FOR PRODUCING LAMINATE**
LAMINAT UND VERFAHREN ZUR HERSTELLUNG VON LAMINAT
STRATIFIÉ ET PROCÉDÉ DE PRODUCTION ASSOCIÉ

(43) Date of publication of application: 26.07.2017
(73) Proprietor: Robert Bosch GmbH, 70442 Stuttgart (DE); GS Yuasa International Ltd., Kisshoin, Minami-ku, Kyoto-shi, Kyoto 601-8520 (JP)
(72) Inventor: Lange, Ulrich, 72631 Aichtal (DE); Salziger, Jan, 73728 Esslingen (DE); Mack, Daniel, 74535 Mainhardt (DE); Klemen, Thomas, 74360 Ilsfeld / Auenstein (DE); Grauer, Benjamin, 70563 Stuttgart (DE); Loewenau, Lena, 70199 Stuttgart (DE); Angerbauer, Ralf, 71696 Moeglingen (DE); Rosenkranz, Mareen, 71034 Boeblingen (DE); Rychtarik, David, 71701 Schwieberdingen (DE); Schmid-Schoenbein, Christian, 70197 Stuttgart (DE)
(74) Representative: Isarpatent

(56) References cited:
- US-A- 4 423 120
- US-A1- 2012 219 777
- DATABASE WPI Week 200863 Thomson Scientific, London, GB; AN 2008-K46925 XP002759427, & CN 101 068 452 A (HANGZHOU YUXING LAMINATED BOARD CO LTD) 7 November 2007 (2007-11-07)

## Description

The invention relates to a laminate comprising a first layer made of a metallic material and a second layer made of a metallic material, the first layer and the second layer are plane connected to one another. The invention also relates to a method for producing laminate by roll-bonding, whereat a first layer made of a metallic material and a second layer made of a metallic material are fed to a rolling machine.

### State of the Art

Roll-bonding can be used for cladding of metal sheets or layers. Roll-bonding is a solid state, cold welding process, obtained through flat rolling of sheet metals. In roll-bonding, two or more layers of different metals are passed through a pair of flat rollers under sufficient pressure to bond the layers. The pressure is high enough to deform the metals and reduce the combined thickness of the clad material. The mating surfaces must be previously prepared, in particular scratched, cleaned and degreased in order to increase their friction coefficient and remove any oxide layers. The process can be performed at room temperature or at warm conditions. Heat may be applied in order to improve the ductility of metals and improve the strength of the weld.

Roll-Bonding is a kind of cladding which is used in particular for bonding together of dissimilar metal sheets. Cladding is often achieved by extruding two metal sheets through a die as well as pressing or rolling sheets together under high pressure. Other processes for fasten metals together are for example fusion welding or gluing.

Document US 2014/0231007 A1 and US 2012/0219777 A1 disclose a copper clad laminate including a fabric sheet material and a method for manufacturing copper clad material. The manufactured clad material contains a resin impregnated fabric sheet having planar surfaces and two copper foils that are adhered to the planar surfaces of the fabric sheet material by a cured resin. The laminate is manufactured preferably in a continuous process. Continuous sheets of copper and a continuous sheet of fabric are continuously unwound into a series of drive rolls to form a layered web. The web is directed into a treating zone at a constant rate and subjected to heat and pressure conditions. The resulting laminate exits the treating zone and is collected as a laminate roll.

Document CN 100566504 C discloses a laminated board covered with copper foil that consists of aluminium board, copper foil and modified epoxy insulation layer set between said aluminium board and said copper foil. For manufacturing said laminated board, modified epoxy resin insulation glue is directly supplied on clean and dry aluminium surfaces by spraying, screen printing roll coating or in combination of said methods.

### Disclosure of the Invention

The invention refers to a laminate that comprises a first layer made of a metallic material and a second layer made of a metallic material, whereat the layers are plane connected to one another. Such a laminate is also referred to as a clad material. The laminate can be produced in particular by roll-bonding in a rolling machine.

According to the invention, the layers are in direct contact to one another and at least one strip made of a non-metallic material is partially arranged between the first layer and the second layer. In particular, that means the layers are connected such that the laminate is electrically conducting between the first layer and the second layer. For example, the strip is made of an electrically insulating material and takes only a part of the area between the first layer and the second layer. The strip does not extend over the whole area between the first layer and the second layer.

Preferably, the strip is made of a thermoplastic material. In particular, the strip is made of polyphenylene sulfide (PPS) or polybutylene terephthalate (PBT). The strip also can be made of a different material, in particular of a polymer. The material of the strip should be soft and flexible and should have a melting point that lies below the melting point of the first layer and below the melting point of the second layer.

According to an advantageous embodiment of the invention, the strip protrudes laterally over the first layer and over the second layer. That means, the first layer and the second layer are aligned with each other and the strip is arranged laterally shifted in respect to the first layer and the second layer.

According to a further development of the invention, a first strip and a second strip are provided such that the first strip and the second strip protrude laterally into opposite directions over the first layer and over the second layer. That means, the first layer and the second layer are aligned with each other and the first strip is arranged laterally shifted in respect to the first layer and the second layer and the second strip is arranged laterally shifted into the opposite direction in respect to the first layer and the second layer.

In particular, the first layer and the second layer are made of dissimilar or different metallic materials. In particular, the first layer is made of aluminium and the second layer is made of copper. Hence, the laminate is advantageously usable for electrically connecting of electrode units. As the collector foils of electrode units are regularly made of copper and aluminium, those foils can easily be connected to the laminate as they are made of the same metallic materials.

The invention also refers to a method for producing laminate by roll-bonding, whereat a first layer made of a metallic material and a second layer made of a metallic material are fed to a rolling machine. The rolling machine comprises for example two rollers that rotate in opposite directions whereat the first layer and the second layer are rolled or milled between said rollers. Thereby, the first layer and the second layer are bonded together. The rollers of the rolling machine are for example shaped cylindrical and rotate about axes that are arranged parallel to each other.

According to the invention, the layers are directly bonded to one another and at least one strip made of a non-metallic material is partially bonded between the first layer and the second layer. That means the laminate is produced such that the strip takes only a part of the area between the first layer and the second layer and that there is a part where the first layer is in direct contact to the second layer. The strip does not extend over the whole area between the first layer and the second layer.

According to an advantageous embodiment of the invention, the first layer and the second layer are fed to the rolling machine aligned with one another and the strip is fed to the rolling machine laterally shifted in respect to the first layer and the second layer. Hence, after production of the laminate the strip protrudes laterally over the first layer and over the second layer.

According to a further development of the invention, the first layer and the second layer are fed to the rolling machine aligned with one another and a first strip and a second strip are fed to the rolling machine laterally shifted into opposite directions in respect to the first layer and the second layer. Hence, after production of the laminate the first strip is arranged laterally shifted in respect to the first layer and the second layer and the second strip is arranged laterally shifted into the opposite direction in respect to the first layer and the second layer.

Advantageously, the at least one strip is partially melted by a laser beam. In particular, the strip is made of a thermoplastic material and has a melting point below the melting points of the first layer and the second layer. Melting the strip increases distribution of the material of the strip between the first layer and the second layer.

Further advantageously, the first layer and/or the second layer are structured by a laser beam. By structuring the first layer or the second layer, the adhesion of the strip between the fist layer and the second layer is increased. The adhesion of the strip between the fist layer and the second layer is increased in particular, when the strip is made of a thermoplastic material and the material of the strip can distribute into the grooves that are developed by structuring in the first layer or in the second layer.

According to a further development of the invention, at least one roller of the rolling machine is convex. That means, the at least one roller has a bigger diameter in a central region where the first layer is directly bonded to the second layer and a smaller diameter in end regions where the strip is bonded between the first layer and the second layer.

A laminate according to the invention is usable advantageously in a battery module in an electric vehicle (EV), in a hybrid electric vehicle (HEV) or in a plug-in hybrid vehicle (PHEV). In particular, the laminate is usable for separating single compartments for acceptance of electrode units within a housing of the battery module. On the one hand, the laminate serves as a gasket avoiding electrolyte to escape the compartment and water to enter the compartment. On the other hand, the laminate is electrically conducting and serves as an electrical conductor to connect the electrode units within the compartments, in particular in series connection.

### Advantages of the Invention

The laminate according to the invention ensures impermeability between the laminate and a block of plastic in which the laminate is embedded partially. The non-metallic strip between the first layer and the second layer is easily connectable to the block of plastic, especially, if said block and the strip are made of the same material. In particular, the laminate is usable for separating single compartments for electrode units within a block of plastic that serves as housing for a battery module. In this case, the laminate serves as a gasket avoiding electrolyte to escape the compartment and water to enter the compartment. When the strip protrudes laterally, the strip can be embedded into a further component and can be injection-moulded around to ensure required impermeability. Furthermore the laminate is electrically conducting in a direction from the first layer to the second layer. Hence, the laminate can serve as an electrical conductor between compartments in a block of plastic that serves as housing for a battery module.

The direct insertion and bonding of the strip spares a separate production step of injection-moulding. The direct bonding of the strip benefits of the relatively high pressure and temperature that arise by roll-bonding. When using a laser beam during roll-bonding the first layer, the second layer and the strip, temperature can be increased partially in selective areas.

### Brief Description of the Drawings

For a better understanding of the aforementioned embodiments of the invention as well as additional embodiments thereof, reference should be made to the description of embodiments below, in conjunction with the appended drawings showing:
- Figure 1: a sectional view at a laminate,
- Figure 2: a perspective, three dimensional view at a rolling machine producing the laminate shown in figure 1,
- Figure 3: a perspective, three dimensional view at the rolling machine shown in figure 2 from a different perspective and
- Figure 4: a sectional view at the rolling machine shown in figures 2 and 3.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

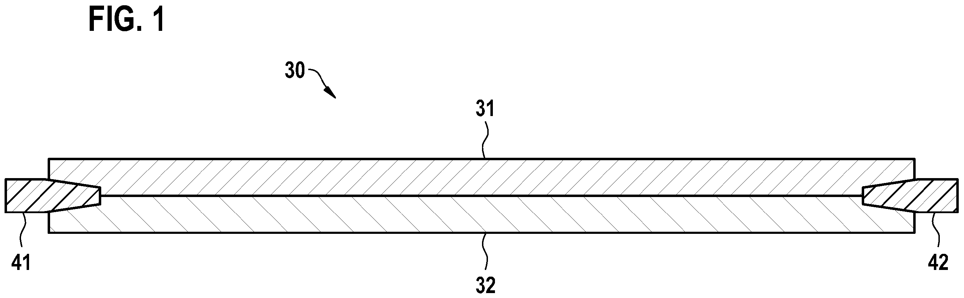

In figure 1, a sectional view at a laminate 30 is given. The laminate 30 presently contains a first layer 31 made of copper and a second layer 32 made of aluminium. The first layer 31 and the second layer 32 are formed as relatively thin foils and are plane connected to one another. The lateral extension of the first layer 31 corresponds to the lateral extension of the second layer 32. Thereby, the layers 31, 32 are in direct contact to one another in a central region of the laminate 30.

In a first lateral end region of the laminate 30 a first strip 41 made of a thermoplastic material is partially arranged between the first layer 31 and the second layer 32. In a second lateral end region of the laminate 30 a second strip 42 made of a thermoplastic material is partially arranged between the first layer 31 and the second layer 32. The first end region and the second end region of the laminate 30 are arranged laterally at opposite sides in respect to the central region of the laminate 30.

The first strip 41 and the second strip 42 protrude laterally into opposite directions over the first layer 31 and over the second layer 32. Thereby, the strips 41, 42 protrude with about half their lateral extension over the first layer 31 and the second layer 32. The other half of their lateral extension is arranged between the first layer 31 and the second layer 32. Hence, the lateral extension of the laminate 30 is bigger than the lateral extension of the first layer 31 and of the second layer 32.

Preferably the lateral extension of the first layer 31 and the second layer 32 is about ten times as big as the lateral extension of the first strip 41 and the second strip 42. For example, the first layer 31 and the second layer 32 each have a lateral extension of about 100 mm. The first strip 41 and the second strip 42 each have a lateral extension of about 10 mm. Thus, the laminate 30 has a lateral extension of about 110 mm. The lateral extension of the central region of the laminate 30 is about 90 mm. The lateral extension of the lateral end regions of the laminate 30 is about 5 mm each. Hence, the first strip 41 and the second strip 42 each protrude laterally about 5 mm over the first layer 31 and over the second layer 32.

Preferably, but not necessarily, the thickness of the first layer 31 and the second layer 32 is bigger than the thickness of the first strip 41 and the second strip 42. For example, the first layer 31 and the second layer 32 each have a thickness between 0.3 mm and 6 mm. The first strip 41 and the second strip 42 each have a thickness between 0.1 mm and 1 mm.

Presently the first layer 31 and the second layer 32 have the same lateral extension. It is also feasible, that the layers 31, 32 have different lateral extensions. Presently the first layer 31 and the second layer 32 have the same thickness. It is also feasible, that the layers 31, 32 have different thickness.

Presently the first strip 41 and the second strip 42 have the same thickness. It is also feasible, that the strips 41, 42 have different thickness. Presently the first strip 41 and the second strip 42 have the same lateral extension. It is also feasible, that the strips 41, 42 have different lateral extensions.

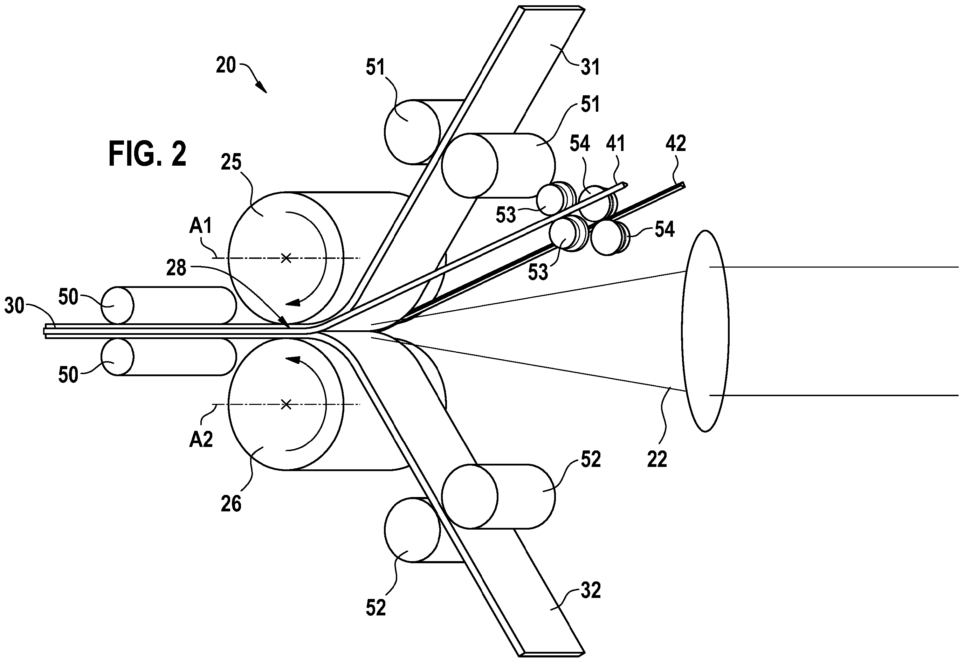

Figure 2 shows a perspective, three dimensional view at parts of a rolling machine 20 producing the laminate 30 shown in figure 1. Figure 2 also shows the first layer 31, the second layer 32, the first strip 41 and the second strip 42 that are fed to the rolling machine 20 for producing the laminate 30.

The rolling machine 20 comprises a first roller 25 and a second roller 26. The first roller 25 rotates about a first rotation axis A1 and the second roller 26 rotates about a second rotation axis A2. The first rotation axis A1 and the second rotation axis A2 are running parallel in respect to each other. Thereby, the first roller 25 and the second roller 26 rotate in opposite directions as can be seen by the arrows shown in figure 1.

The first layer 31, the second layer 32, the first strip 41 and the second strip 42 are fed from an entry side into a slot 28 that remains between the first roller 25 and the second roller 26. Within said slot 28, the first layer 31, the second layer 32, the first strip 41 and the second strip 42 are rolled by the first roller 25 and the second roller 26. Thereby, the first layer 31, the second layer 32, the first strip 41 and the second strip 42 are bonded together.

On an exit side that is located opposite to the entry side in respect to the rollers 25, 26 the produced laminate 30 emerges the slot 28 between the first roller 25 and the second roller 26. While the laminate 30 emerges the rolling machine 20, the referred lateral direction in respect to the laminate 30 is orientated parallel to the first rotation axis A1 and the second rotation axis A2.

A pair of auxiliary rolls 50 is arranged on the exit side in respect to the slot 28 and the rollers 25, 26. The laminate 30 that is produced in the rolling machine 20 is led through said pair of auxiliary rolls 50. The auxiliary rolls 50 transport the produced laminate 30 to a collecting roll that is not shown here, whereat the produced laminate 30 is wound upon said collecting roll.

A pair of first guide rolls 51 is arranged on the entry side in respect to the slot 28 and the rollers 25, 26. The first guide rolls 51 transport the first layer 31 towards the slot 28 of the rolling machine 20. A pair of second guide rolls 52 is also arranged on the entry side in respect to the slot 28 and the rollers 25, 26. The second guide rolls 52 transport the second layer 32 towards the slot 28 of the rolling machine 20.

A pair of third guide rolls 53 is arranged on the entry side in respect to the slot 28 and the rollers 25, 26. The third guide rolls 53 transport the first strip 41 towards the slot 28 of the rolling machine 20. A pair of fourth guide rolls 54 is also arranged on the entry side in respect to the slot 28 and the rollers 25, 26. The fourth guide rolls 54 transport the second strip 42 towards the slot 28 of the rolling machine 20.

A laser beam 22 is directed to an area close to the slot 28 where the first layer 31, the second layer 32, the first strip 41 and the second strip 42 are brought together. The laser beam 22 is oscillating along said slot 28 parallel to the rotation axes A1, A2 and to the lateral direction in respect to the laminate 30. The laser beam 22 partially melts the strips 41, 42. The laser beam 22 also structures the layers 31, 32.

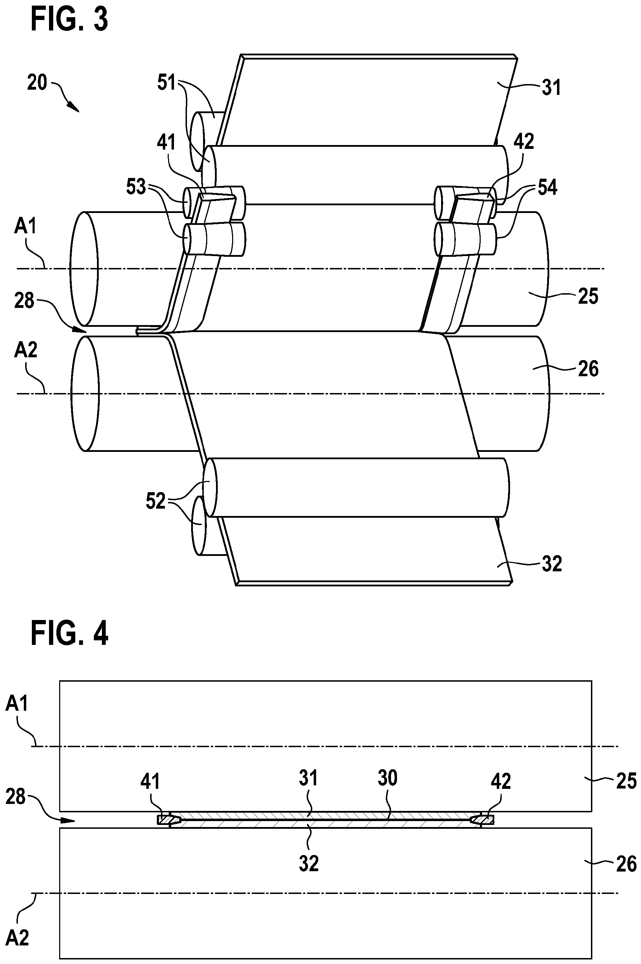

Figure 3 shows a perspective, three dimensional view at parts of the rolling machine 20 shown in figure 2 from a different perspective and the materials that are fed to the rolling machine 20 for producing the laminate 30.

The first layer 31 and the second layer 32 are fed to the slot 28 of the rolling machine 20 aligned with one another. The first strip 41 and a second strip 42 are fed to the slot 28 of the rolling machine 20 laterally shifted into opposite directions. Thereby, the first layer 31 and the second layer 32 overlap the strips 41, 42 partially.

Hence, in the central region the layers 31, 32 are in direct contact to one another and are bonded together directly. In the first lateral end region and in the second lateral end region the strips 41, 42 are partially arranged between the first layer 31 and the second layer 32 and are partially bonded between the first layer 31 and the second layer 32.

The auxiliary rolls 50 that are not visible in this presentation, the first guide rolls 51, the second guide rolls 52, the third guide rolls 53 and the fourth guide rolls 54 are shaped cylindrical and rotate about axes that are running parallel to each other. Said axes also run parallel to the rotation axes A1, A2 of the first roller 25 and the second roller 26.

Figure 4 shows a sectional view at parts of the rolling machine 20 shown in figures 2 and 3. In particular, figure 4 shows a section through the first roller 25 and the second roller 26 with an augmented view at the slot 28 with the laminate 30 arranged therein.

Presently, the rollers 25, 26 of the rolling machine 20 are shaped cylindrical. Hence, the thickness of the slot 28 which corresponds to the distance between the surface of the first roller 25 to the surface of the second roller 26 is constant in lateral direction. It is also feasible that one roller 25, 26 or both rollers 25, 26 are shaped convex. In that case, the slot 28 would have a smaller thickness in the central region of the laminate 30 and a bigger thickness in the end regions of the laminate 30.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Laminate (30), comprising
a first layer (31) made of a metallic material and
a second layer (32) made of a metallic material,
the layers (31, 32) being plane connected to one another,
**characterized in that**
the layers (31, 32) are in direct contact to one another and
at least one strip (41, 42) made of a non-metallic material is only partially arranged between the first layer (31) and the second layer (32).

2. Laminate (30) according to claim 1, **characterised in that** the strip (41, 42) is made of a thermoplastic material.

3. Laminate (30) according to one of the preceding claims, **characterised in that** the strip (41, 42) protrudes laterally over the first layer (31) and over the second layer (32).

4. Laminate (30) according to one of the preceding claims, **characterised in that** a first strip (41) and a second strip (42) are provided such that the first strip (41) and the second strip (42) protrude laterally into opposite directions over the first layer (31) and over the second layer (32).

5. Laminate (30) according to one of the preceding claims, **characterised in that** the first layer (31) and the second layer (32) are made of dissimilar metallic materials.

6. Method for producing laminate (30) by roll-bonding, whereat
a first layer (31) made of a metallic material and
a second layer (32) made of a metallic material
are fed to a rolling machine (20),
**characterised in that**
the layers (31, 32) are directly bonded to one another and
at least one strip (41, 42) made of a non-metallic material is partially bonded between the first layer (31) and the second layer (32).

7. Method according to claim 6, **characterised in that**
the first layer (31) and the second layer (32) are fed to the rolling machine (20) aligned with one another and that
the strip (41, 42) is fed to the rolling machine (20) laterally shifted in respect to the first layer (31) and the second layer (32).

8. Method according to claim 6, **characterised in that**
the first layer (31) and the second layer (32) are fed to the rolling machine (20) aligned with one another and that
a first strip (41) and a second strip (42) are fed to the rolling machine (20) laterally shifted into opposite directions in respect to the first layer (31) and the second layer (32).

9. Method according to one of claims 6 to 8, **characterised in that**
the at least one strip (41, 42) is partially melted by a laser beam (22).

10. Method according to one of claims 6 to 9, **characterised in that**
the first layer (31) and/or the second layer (32) are structured by a laser beam (22).

11. Method according to one of claims 6 to 10, **characterised in that**
at least one roller (25, 26) of the rolling machine (20) is convex.

12. Usage of a laminate (30) according one of claims 1 to 5 in a battery module in an electric vehicle (EV), in a hybrid electric vehicle (HEV) or in a plug-in hybrid vehicle (PHEV).

## Patentansprüche

1. Laminat (30), umfassend
eine erste Schicht (31), die aus einem metallischen Material ist, und
eine zweite Schicht (32), die aus einem metallischen Material ist,
wobei die Schichten (31, 32) flächig miteinander verbunden sind,
**dadurch gekennzeichnet, dass**
die Schichten (31, 32) miteinander direkt in Kontakt sind und
mindestens ein Streifen (41, 42), der aus einem nichtmetallischen Material ist, nur teilweise zwischen der ersten Schicht (31) und der zweiten Schicht (32) angeordnet ist.

2. Laminat (30) nach Anspruch 1, **dadurch gekennzeichnet, dass** der Streifen (41, 42) aus einem thermoplastischen Material ist.

3. Laminat (30) nach einem der vorhergehenden Ansprüche, **dadurch gekennzeichnet, dass** der Streifen (41, 42) über die erste Schicht (31) und über die zweite Schicht (32) seitlich vorsteht.

4. Laminat (30) nach einem der vorhergehenden Ansprüche, **dadurch gekennzeichnet, dass** ein erster Streifen (41) und ein zweiter Streifen (42) derart vorgesehen sind, dass der erste Streifen (41) und der zweite Streifen (42) in entgegengesetzte Richtungen über die erste Schicht (31) und über die zweite Schicht (32) vorstehen.

5. Laminat (30) nach einem der vorhergehenden Ansprüche, **dadurch gekennzeichnet, dass** die erste Schicht (31) und die zweite Schicht (32) aus unterschiedlichen metallischen Materialien sind.

6. Verfahren zum Herstellen von Laminat (30) durch Walzplattieren, wobei
eine erste Schicht (31), die aus einem metallischen Material ist, und eine zweite Schicht (32), die aus einem metallischen Material ist, einer Walzmaschine (20) zugeführt werden,
**dadurch gekennzeichnet, dass**
die Schichten (31, 32) direkt aneinander gebunden werden und mindestens ein Streifen (41, 42), der aus einem nichtmetallischen Material ist, teilweise zwischen der ersten Schicht (31) und der zweiten Schicht (32) gebunden wird.

7. Verfahren Anspruch 6, **dadurch gekennzeichnet, dass**
die erste Schicht (31) und die zweite Schicht (32) der Walzmaschine (20) zueinander ausgerichtet zugeführt werden, und darin, dass
der Streifen (41, 42) der Walzmaschine (20) in Bezug auf die erste Schicht (31) und die zweite Schicht (32) seitlich verschoben zugeführt wird.

8. Verfahren Anspruch 6, **dadurch gekennzeichnet, dass**
die erste Schicht (31) und die zweite Schicht (32) der Walzmaschine (20) zueinander ausgerichtet zugeführt werden, und darin, dass
ein erster Streifen (41) und ein zweiter Streifen (42) der Walzmaschine (20) in Bezug auf die erste Schicht (31) und die zweite Schicht (32) in entgegengesetzte Richtungen seitlich verschoben zugeführt werden.

9. Verfahren nach einem der Ansprüche 6 bis 8, **dadurch gekennzeichnet, dass**
der mindestens eine Streifen (41, 42) durch einen Laserstrahl (22) teilweise geschmolzen wird.

10. Verfahren nach einem der Ansprüche 6 bis 9, **dadurch gekennzeichnet, dass**
die erste Schicht (31) und/oder die zweite Schicht (32) durch einen Laserstrahl (22) strukturiert werden.

11. Verfahren nach einem der Ansprüche 6 bis 10, **dadurch gekennzeichnet, dass**
mindestens ein Wälzkörper (25, 26) der Walzmaschine (20) konvex ist.

12. Verwendung eines Laminats (30) nach einem der Ansprüche 1 bis 5 in einem Batteriemodul in einem Elektrofahrzeug (EV), in einem Hybridelektrofahrzeug (HEV) oder in einem Plug-in-Hybridfahrzeug (PHEV).

## Revendications

1. Stratifié (30), comprenant :
une première couche (31) constituée d'un matériau métallique et
une seconde couche (32) constituée d'un matériau métallique, les couches (31, 32) étant reliées à plat l'une contre l'autre,
**caractérisé en ce**
**que** les couches (31, 32) sont en contact direct l'une avec l'autre et
au moins une bande (41, 42) constituée d'un matériau non métallique est partiellement agencée entre la première couche (31) et la seconde couche (32).

2. Stratifié (30) selon la revendication 1, **caractérisé en ce que** la bande (41, 42) est constituée d'un matériau thermoplastique.

3. Stratifié (30) selon l'une quelconque des revendications précédentes, **caractérisé en ce que** la bande (41, 42) fait saillie latéralement sur la première couche (31) et sur la seconde couche (32).

4. Stratifié (30) selon l'une quelconque des revendications précédentes, **caractérisé en ce qu'**une première bande (41) et une seconde bande (42) sont prévues de telle sorte que la première bande (41) et la seconde bande (42) font saillie latéralement dans des directions opposées sur la première couche (31) et sur la seconde couche (32).

5. Stratifié (30) selon l'une quelconque des revendications précédentes, **caractérisé en ce que** la première couche (31) et la seconde couche (32) sont constituées de matériaux métalliques différents.

6. Procédé de fabrication de stratifié (30) par colaminage, dans lequel
une première couche (31) constituée d'un matériau métallique et une seconde couche (32) constituée d'un matériau métallique sont introduites dans une machine de laminage (20),
**caractérisé en ce**
**que** les couches (31, 32) sont directement liées l'une à l'autre et au moins une bande (41, 42) constituée d'un matériau non métallique est partiellement liée entre la première couche (31) et la seconde couche (32).

7. Procédé selon la revendication 6, **caractérisé en ce**
**que** la première couche (31) et la seconde couche (32) sont introduites dans la machine de laminage (20) alignées l'une avec l'autre et en ce
**que** la bande (41, 42) est introduite dans la machine de laminage (20) décalée latéralement par rapport à la première couche (31) et à la seconde couche (32).

8. Procédé selon la revendication 6, **caractérisé en ce**
**que** la première couche (31) et la seconde couche (32) sont introduites dans la machine de laminage (20) alignées l'une avec l'autre et en ce
**qu'**une première bande (41) et une seconde bande (42) sont introduites dans la machine de laminage (20) décalées latéralement dans des directions opposées par rapport à la première couche (31) et à la seconde couche (32).

9. Procédé selon l'une quelconque des revendications 6 à 8, **caractérisé en ce**
**que** la au moins une bande (41, 42) est partiellement fondue par un faisceau laser (22).

10. Procédé selon l'une quelconque des revendications 6 à 9, **caractérisé en ce**
**que** la première couche (31) et/ou la seconde couche (32) sont structurées par un faisceau laser (22).

11. Procédé selon l'une quelconque des revendications 6 à 10, **caractérisé en ce**
**qu'**au moins un rouleau (25, 26) de la machine de laminage (20) est convexe.

12. Utilisation d'un stratifié (30) selon l'une des revendications 1 à 5, dans un module de batterie dans un véhicule électrique (EV), dans un véhicule électrique hybride (H EV), ou dans un véhicule hybride rechargeable (PH EV) .
